# EUROPÄISCHE PATENTSCHRIFT

(11) **EP 1 035 044 B1**
(45) Veröffentlichungstag und Bekanntmachung des Hinweises auf die Patenterteilung: **14.06.2006**
(21) Anmeldenummer: 00101029.7
(22) Anmeldetag: 20.01.2000
(51) Int. Cl.: B65G 1/04

(54) **Vorrichtung zur Positionierung eines Fahrzeugs**
Positioning device for a vehicle
Dispositif pour positionner un véhicule

(30) Priorität: 12.03.1999 DE 19910933
(43) Veröffentlichungstag der Anmeldung: 13.09.2000
(73) Patentinhaber: Leuze electronic GmbH + Co. KG, 73277 Owen/Teck (DE)
(72) Erfinder: Wörner, Jörg, 73235 Weilheim/Teck (DE); Keinath, Armin, Dr., 72581 Dettingen (DE)
(74) Vertreter: Ruckh, Rainer Gerhard

(56) Entgegenhaltungen:
- CH-A- 654 810
- DE-A- 4 424 008
- DE-A- 19 646 483
- DE-U- 29 504 463
- DE-U- 29 621 749
- US-A- 3 786 929
- US-A- 4 331 417
- PATENT ABSTRACTS OF JAPAN vol. 012, no. 443 (P-790), 22. November 1988 (1988-11-22) -& JP 63 173105 A (MATSUSHITA ELECTRIC IND CO LTD), 16. Juli 1988 (1988-07-16)
- PATENT ABSTRACTS OF JAPAN vol. 016, no. 083 (M-1216), 28. Februar 1992 (1992-02-28) -& JP 03 267206 A (HITACHI LTD), 28. November 1991 (1991-11-28)

## Beschreibung

Die Erfindung betrifft eine Vorrichtung zur Positionierung eines Fahrzeugs gemäß dem Oberbegriff des Anspruchs 1.

Derartige Vorrichtungen werden insbesondere zur Positionierung von Regalbediengeräten an Regalfachsystemen eingesetzt. Das Regalbediengerät wird vorzugsweise auf Schienen in vorgegebenem Abstand zum Regalfachsystem an diesem vorbeibewegt. Mittels des Regalbediengeräts werden an fest vorgegebenen Positionen einzelne Regalfächer mit Paletten oder dergleichen beladen oder entladen. Dabei ist es notwendig, daß das Regalbediengerät mit großer Genauigkeit vor einem Regalfach positioniert wird.

Hierzu wird üblicherweise der Absolutort des Regalbediengeräts mittels Drehgebern erfaßt. Eine derartige Absolutortsbestimmung ist jedoch schlupfbehaftet und damit ungenau. Zudem sind derartige Systeme anfällig gegen mechanischen Verschleiß.

Alternativ kann der Absolutort des Regalbediengeräts mittels eines optischen Distanzsensors bestimmt werden. Der optische Distanzsensor ist stationär in Abstand hinter dem Regalbediengerät angeordnet. Das Regalbediengerät weist an seiner Stirnseite einen Reflektor auf. Der optische Distanzsensor emittiert Sendelichtstrahlen, welche auf den Reflektor treffen und von dort zum Distanzsensor zurückreflektiert werden. Die Distanz des Regalbediengeräts zum Distanzsensor wird vorzugsweise durch eine Laufzeitmessung bestimmt.

Zusätzlich sind an den Regalfächern an vorgegebenen Orten Reflektoren angebracht, welche mittels eines Lichttasters am Fahrzeug detektierbar sind. Diese Reflektoren markieren die Position am Regalfach, an welcher durch das Regalbediengerät Paletten ein- oder ausgelagert werden sollen.

Nachteilig bei derartigen Vorrichtungen ist, daß mittels des Distanzsensors millimetergenau die Position des Regalbediengeräts bestimmt werden muß. Die hierfür notwendige Distanzmessung muß dabei über sehr große Entfernungen erfolgen. Dies erfordert eine sehr große Meßgenauigkeit des Distanzsensors, was wiederum sehr hohe Kosten für dessen Herstellung bedingt. Desweiteren ist nachteilig, daß diese Distanzmessung sehr anfällig gegen Störeinflüsse ist. Beispielsweise kann bereits eine geringe Dejustierung des Distanzsensors am Regalbediengerät dazu führen, daß die Distanzmessungen unbrauchbar werden.

Schließlich bedeutet auch die Anbringung einer Vielzahl von Reflektoren an den Regalfächern des Regalfachsystems einen unerwünscht hohen Kostenaufwand. Zudem ist zur Detektion der Reflektoren ein weiterer Sensor erforderlich, was die Kosten weiter erhöht.

Eine gattungsgemäße Vorrichtung zum Positionieren bezüglich einer Mehrzahl von Stationen ist aus der DE 196 46 483 A1 bekannt. Die Vorrichtung ist längs eines vorbestimmten Weges bewegbar, an welchem mehrere Stationen angeordnet sind. In Abständen längs des Weges werden Zeichen angebracht, die je wenigstens einer der Stationen zugeordnet sind und die von einer von der Vorrichtung getragenen Abtasteinrichtung abgetastet werden können. Für jede Station wird ein Wert gespeichert, der die Lage darstellt, welche die Abtasteinrichtung in Bezug auf das der Station zugeordnete Zeichen einnimmt, wenn die Abtastvorrichtung in einer vorgesehenen Position bezüglich der Station ist, Für das Positionieren der Vorrichtung bezüglich jeder der Stationen wird die Vorrichtung bewegt zuerst bis die Abtasteinrichtung den Anfang des der Station zugeordneten Zeichens erreicht und dann noch über eine Strecke, welche dem für die Station gespeicherten Wert entspricht. So werden die Nachteile vermieden, die auftreten würden, wenn auf dem ganzen Weg die von der Vorrichtung zurückgelegte Wegstrecke genau gemessen werden müsste oder wenn die Zeichen bezüglich jeder der Stationen ganz genau positioniert werden müssten.

Die DE 44 24 008 A1 betrifft eine optoelektronische Vorrichtung zum Erkennen von mit definierten Kontrastmustern versehenen Marken mit einem einen Sendelichtstrahl emittierenden Sendeelement und einem Empfangselement. Der Sendelichtstrahl wird über die Marken geführt. Das von den Marken reflektierte Empfangslicht, welches eine durch den Kontrast der Marken aufgeprägte Amplitudenmodulation aufweist, wird in einer Auswerteeinheit ausgewertet. An einem Zielobjekt sind Referenz-Marken angeordnet, in deren Kontrastmustem die Positionen der Referenz-Marken kodiert sind. Die optoelektronische Vorrichtung ist auf einem relativ zum Zielobjekt bewegten Objekt installiert, wobei zur Positionierung des Objekts relativ zum Zielobjekt die Kontrastmuster der Referenz-Marken von der Vorrichtung gelesen und in der Auswerteeinheit ausgewertet werden.

In der US 4,331,417 ist eine dreieckige Zielmarke beschrieben, die mit einem Sensor zur Positionierung eines Fahrzeugs abgetastet wird.

Die CH 654 810 A5 beschreibt eine Vorrichtung zur Bestimmung der Position an einem Hochregallager, bei welchem Code-Markierungen zur Positionsbestimmung erfaßt werden.

Der Erfindung liegt die Aufgabe zugrunde, eine Vorrichtung der eingangs genannten Art so auszubilden, daß eine möglichst einfache und kostengünstige Positionierung eines Fahrzeugs an einem Gegenstand mit großer Genauigkeit ermöglicht wird.

Zur Lösung dieser Aufgabe sind die Merkmale des Anspruchs 1 vorgesehen. Vorteilhafte Ausführungsformen und zweckmäßige Weiterbildung der Erfindung sind in den Unteransprüchen beschrieben.

Ein wesentlicher Vorteil der erfindungsgemäßen Vorrichtung besteht darin, daß sowohl zur Absolutortsbestimmung als auch zur Grob- und Feinpositionierung des Fahrzeugs ein optischer Sensor einsetzbar ist, welcher auf dem Fahrzeug angeordnet ist. Dieser optische Sensor erfaßt Marken und / oder Zielmarken am Gegenstand, welche in relativ geringer Entfernung zum Fahrzeug angebracht sind. Die Anforderungen an die Meßgenauigkeit des optischen Sensors sind somit gering, so daß bereits mit geringem Kostenaufwand eine hinreichende Meßgenauigkeit zur Positionierung des Fahrzeugs realisierbar ist. Besonders vorteilhaft wird ein optischer Sensor sowohl für die Absolutortsbestimmung und die Grobpositionierung als auch für die Feinpositionierung eingesetzt, was die Herstellkosten für die Vorrichtung weiter senkt.

Schließlich ist vorteilhaft, daß die Marken, welche vorteilhaft als Barcodes ausgebildet sind, kostengünstig herstellbar sind und zudem einfach auf den Gegenständen aufbringbar sind. Beispielsweise können die Marken auf die Gegenstände aufgeklebt oder auflackiert werden. Eine derartige Anordnung kann zudem auf einfache Weise bei Bedarf geändert werden. Desweiteren können am Fahrzeug Bürsten oder dergleichen angebracht sein, welche während der Vorbeifahrt des Fahrzeugs am Gegenstand die dort angebrachten Marken reinigen. Auf diese Weise werden Fehlmessungen infolge von Verschmutzungen weitgehend ausgeschlossen.

Die erfindungsgemäße Vorrichtung zur Positionierung kann für ein breites Spektrum von Gegenständen und Fahrzeugen eingesetzt werden. Beispielsweise können mit der erfindungsgemäßen Vorrichtung Positioniervorgänge an Krananlagen durchgeführt werden. Desweiteren können die Fahrzeuge von fahrerlosen Transportsystemen gebildet sein, welche an vorgegebenen Positionen an Andockstationen positioniert werden müssen. Derartige Transportsysteme werden beispielsweise an Flughäfen oder in Montagehallen im Bereich der Automobilindustrie eingesetzt. In einer besonders vorteilhafte Ausführungsform der Erfindung wird die Vorrichtung zur Positionierung eines Regalbediengeräts an Regalfächern eines Regalfachsystems eingesetzt.

Die Erfindung wird im nachstehenden anhand der Zeichnungen erläutert. Es zeigen.
- Figur 1:: Draufsicht auf ein vor einem Regalfachsystem angeordnetes und längs zu diesem verfahrbares Regalbediengerät.
- Figur 2:: Prinzipaufbau eines als Barcodelesegerät ausgebildeten optischen Sensors für das Regalbediengerät gemäß Figur 1.
- Figur 3:: Empfangssignale des optischen Sensors gemäß Figur 2 bei Abtastung einer Zielmarke.
- Figur 4:: Zweites Ausführungsbeispiel eines Regalfachsystems gemäß Figur 1 mit daran angeordneten Marken.
- Figur 5:: Drittes Ausführungsbeispiel eines Regalfachsystems gemäß Figur 1 mit daran angeordneten Marken.
- Figur 6:: Viertes Ausführungsbeispiel eines Regalfachsystems gemäß Figur 1 mit daran angeordneten Marken.
- Figur 7:: Fünftes Ausführungsbeispiel eines Regalfachsystems gemäß Figur 1 mit daran angeordneten Marken.

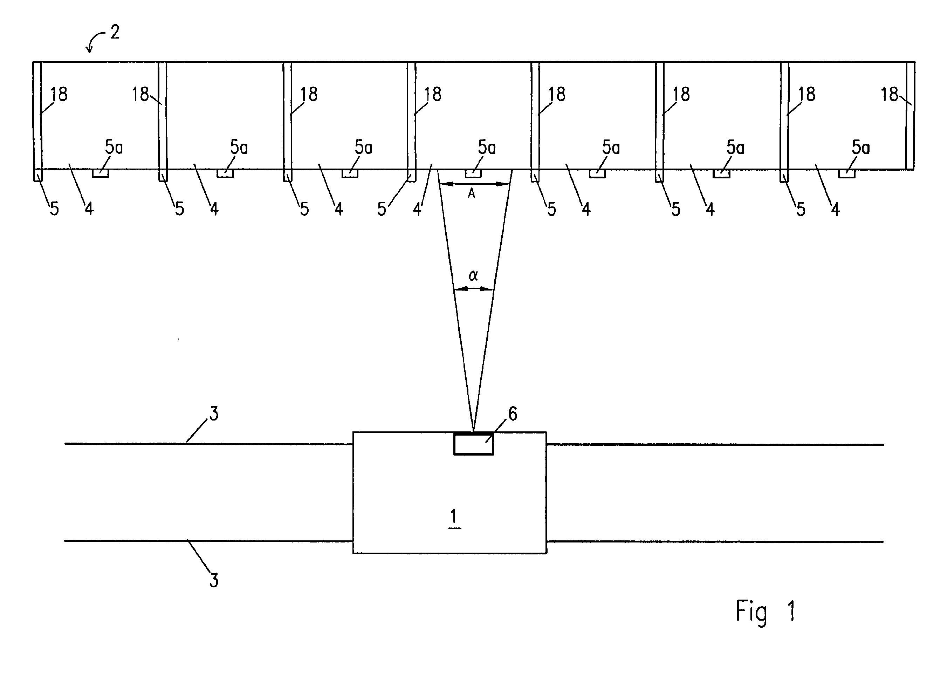

Figur 1 zeigt ein von einem Regalbediengerät 1 gebildetes Fahrzeug, welches vor einem von einem Regalfachsystem 2 gebildeten Gegenstand verfahrbar angeordnet ist. Das Regalbediengerät 1 ist ein fahrerloses Transportfahrzeug, welches auf Schienen 3 in konstantem Abstand zur Frontwand des Regalfachsystems 2 geführt ist. Mit dem Regalbediengerät 1 werden typischerweise Paletten mit Lagergut transportiert, welche in Regalfächern 4 des Regalfachsystems 2 gelagert werden. Zur Be- und Entladung der Regalfächer 4 mit den Paletten muß das Regalbediengerät 1 positionsgenau vor das jeweilige Regalfach 4 verfahren werden. Die geforderte Positionsgenauigkeit liegt dabei im Millimeterbereich.

Sobald das Regalbediengerät 1 vor dem Regalfach 4 positioniert ist, wird mittels eines nicht dargestellten Greifarms oder dergleichen, welcher am Regalbediengerät 1 angeordnet ist, eine Palette in das Regalfach 4 eingelagert oder aus diesem entnommen.

Zur Positionierung des Regalbediengeräts 1 sind an dem Regalfachsystem 2 Kodierungen aufweisende Marken 5 sowie Zielmarken 5a aufgebracht, welche mittels eines optischen Sensors 6, der am Regalbediengerät 1 befestigt ist, erfaßbar sind. Die Marken 5 können als Klebestreifen auf dem Regalfachsystem 2 aufgeklebt oder auflackiert sein. Alternativ können die Marken 5 auch an den Regalfächern 4 eingebrannt oder eingestanzt sein, wobei dies bereits während des Herstellprozesses für die Profile des Regalfachsystems 2 erfolgen kann. Der optische Sensor 6 ist an eine nicht dargestellte Steuereinheit des Regalbediengeräts 1 angeschlossen. Die Fahrt des Regalbediengeräts 1 wird durch die Steuerung in Abhängigkeit der Signale des optischen Sensors 6 gesteuert.

Der optische Sensor 6 ist allgemein ein Erfassungssystem der Kodierungen auf den Marken 5. Beispielsweise kann der optische Sensor 6 ein von einem CCD-Element gebildetes Empfangselement aufweisen, auf welchem das Muster einer Marke 5 abbildbar ist.

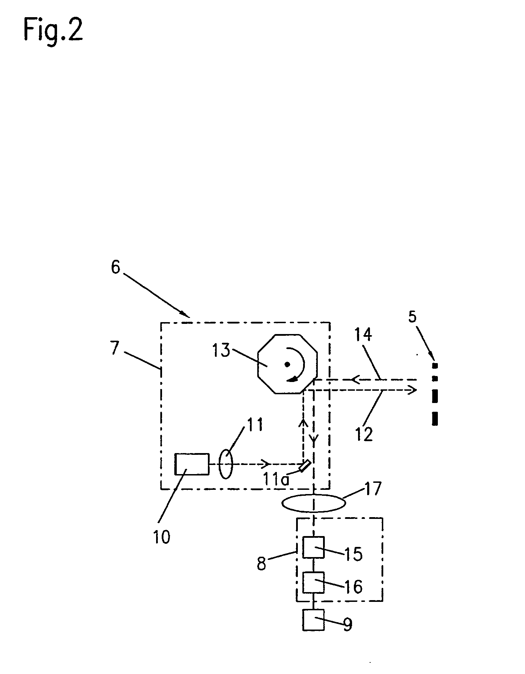

In Figur 2 ist der prinzipielle Aufbau eines optischen Sensors 6, der als Barcodelesegerät ausgebildet ist, dargestellt. Das Barcodelesegerät wird zur Erkennung von Marken 5 eingesetzt, welche aus einer Folge von hellen und dunklen Strichelementen oder dergleichen bestehen, welche die Kodierungen der Marke 5 darstellen. Insbesondere können die Marken 5 von Barcodes gebildet sein, welche aus einer Folge von schwarzen und weißen Strichelementen definierter Länge und Breite bestehen.

Der optische Sensor 6 besteht im wesentlichen aus einem Sendeelement 7, einem Empfangselement 8 sowie einer Auswerteeinheit 9. Das Sendeelement 7 besteht aus einem Sender 10, vorzugsweise einer Laserdiode, sowie aus einer dem Sender 10 vorgeschalteten Sendeoptik 11 zur Fokussierung der Sendelichtstrahlen 12. Die fokussierten Sendelichtstrahlen 12 werden über einen Umlenkspiegel auf eine Ablenkeinheit 13, die im vorliegende Ausführungsbeispiel von einem rotierenden Polygonspiegelrad gebildet ist geführt, dort abgelenkt und über die zu detektierende Marke 5 geführt. Die Drehachse des Polygonspiegelrads ist senkrecht zur in Figur 2 dargestellten Äquatorialebene des Polygonspiegelrads angeordnet.

Die von der Marke 5 reflektierten Empfangslichtstrahlen 14 werden über das Polygonspiegelrad zum Empfangselement 8 geführt. Das Empfangselement 8 besteht aus einer Photodiode 15, in der die Empfangslichtstrahlen 14 in ein elektrisches Empfangssignal gewandelt werden, und einem dieser nachgeschalteten Verstärker 16. Zur Verbesserung der Nachweisempfindlichkeit ist dem Empfangselement 8 eine Empfangsoptik 17 vorgeschaltet.

Das am Ausgang des Empfangselements 8 anstehende Empfangssignal wird der Auswerteeinheit 9 zugeführt. Die Auswerteeinheit 9 weist eine Schwellwerteinheit auf, mittels derer die Empfangssignale der Hellflächen von dem Empfangssignalen der Dunkelflächen der Marken 5 getrennt werden.

Im vorliegenden Ausführungsbeispiel weist das Polygonspiegelrad acht Facetten auf. Dementsprechend wird ein Öffnungswinkel des Barcodelesegeräts von 90° erhalten. Während einer Abtastperiode werden die Sendelichtstrahlen 12 innerhalb des Öffnungswinkels entlang der Abtastebene geführt. Dieser Öffnungswinkel ist in Figur 1 mit α bezeichnet. Entsprechend des Öffnungswinkels α und des Abstands des Regalbediengeräts 1 zum Regalfachsystem 2 wird an dessen Frontwand mittels des optischen Sensors 6 periodisch ein Abtastbereich A abgetastet.

Dabei ist der optische Sensor 6 üblicherweise so ausgerichtet, daß die Winkelhalbierende des Öffnungswinkels α senkrecht zur Oberfläche des Regalfachsystems 2 verläuft. Eventuelle Verkippungen des optischen Sensors 6 und damit verbundene Verschiebungen des Abtastbereichs können durch einen geeigneten Offset kompensiert werden, welcher in der Auswerteeinheit 9 abgespeichert wird. Hierzu kann der optische Sensor 6 einen nicht dargestellten Schalteingang aufweisen, welcher beispielsweise durch die Steuereinheit aktiviert wird.

Bei dem in Figur 1 dargestellten Ausführungsbeispiel besteht das Regalfachsystem 2 aus mehreren nebeneinander angeordneten identischen Regalfächern 4, die jeweils durch einen Pfosten 18 oder dergleichen voneinander getrennt sind. Zur Kennzeichnung der einzelnen Regalfächer 4 ist jeweils an einer der unteren Ecken der Regalfächer 4 eine Marke 5 angebracht, in deren Muster die Nummer des Regalfachs 4 kodiert ist. Dabei sind die Regalfächer 4 fortlaufend mit unterschiedlichen Nummern durchnumeriert.

Während einer Referenzfahrt wird das Regalbediengerät 1 mit konstanter und geringer Geschwindigkeit an sämtlichen Regalfächern 4 vorbeibewegt. Dabei werden mittels des optischen Sensor 6 nacheinander die Marken 5 an den einzelnen Regalfächern 4 erfaßt. Die dabei registrierten Nummern der einzelnen Regalfächer 4 werden dabei nacheinander in der Auswerteeinheit 9 des optischen Sensors 6 als Referenzwerte abgespeichert.

Nach der Referenzfahrt wird der Betrieb des Regalbediengeräts 1 aufgenommen. Während des Betriebs werden wiederum die Marken 5 am Regalfachsystem 2 mittels des optischen Sensors 6 erfaßt. Durch einen Vergleich der dabei registrierten Meßwerte mit den Referenzwerten ist eine Absolutortsbestimmung des Regalbediengeräts 1 am Regalfachsystem 2 möglich.

Dabei ist insbesondere vorteilhaft, daß auch beim Einschalten des Regalbediengeräts 1 dessen Absolutort schnell bestimmbar ist, indem das Regalbediengerät 1 solange verfahren wird, bis vom optischen Sensor 6 die nächste Marke 5 erfaßt wird.

Zur Positionierung des Regalbediengeräts 1 wird dieses zunächst mit relativ großer Geschwindigkeit am Regalfachsystem 2 vorbeibewegt. Sobald mittels des optischen Sensors 6 die Nummer des Regalfachs 4 erfaßt worden ist, an welchem das Regalbediengerät 1 positioniert werden soll, beginnt die Feinpositionierung des Regalbediengeräts 1. Dabei wird das Regalbediengerät 1 abgebremst, wobei der Abbremsvorgang so gesteuert ist, daß dieses punktgenau auf einem vorgegebenen Zielort positioniert wird.

Im vorliegenden Ausführungsbeispiel ist das Regalbediengerät 1 auf die Mitte eines Regalfaches 4 zu positionieren. Daher ist jeweils in der Mitte eines Regalbodens eine Zielmarke 5a angebracht, welche von einem Barcode oder dergleichen gebildet sein kann. Zur Durchführung der Feinpositionierung wird mittels des als Barcodelesegerät ausgebildeten optischen Sensors 6 dessen Lage relativ zur betreffenden Zielmarke 5a bestimmt. Die Feinpositionierung ist dann abgeschlossen, wenn diese Relativposition einen vorgegebenen Sollwert erreicht, der beispielsweise in der Auswerteeinheit 9 des optischen Sensors 6 abgespeichert ist.

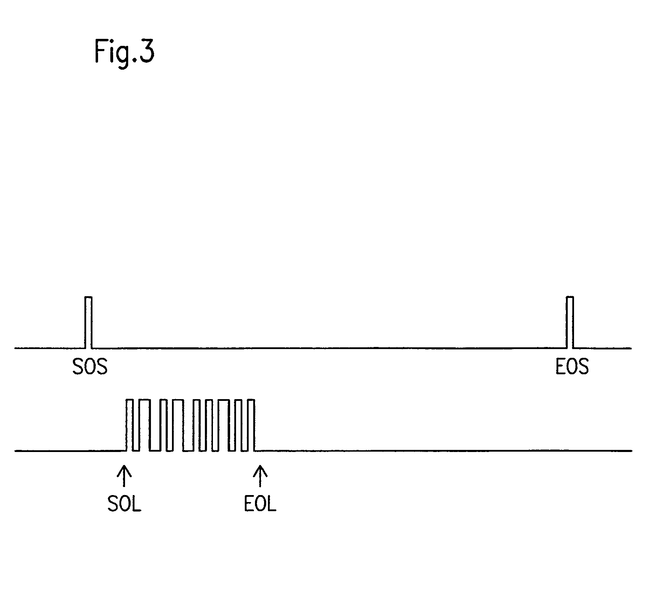

Die Durchführung der Feinpositionierung ist in Figur 3 veranschaulicht.

In der unteren Zeile in Figur 3 ist der zeitliche Verlauf des von der Zielmarke 5a stammenden Empfangssignals, das am Empfangselement 8 des Barcodelesegeräts gemäß Figur 2 ansteht, dargestellt. Der Anfang und das Ende des von der Zielmarke 5a stammenden Signals sind mit SOL ("Start of Label") und EOL ("End of Label") gekennzeichnet. Vorzugsweise weist die Zielmarke 5a an ihren Enden jeweils ein charakteristisches Strichelement auf, welchen die Signale EOL, EOS eindeutig zugeordnet werden können. Auf diese Weise ist überprüfbar, ob die Zielmarke 5a vollständig gelesen worden ist.

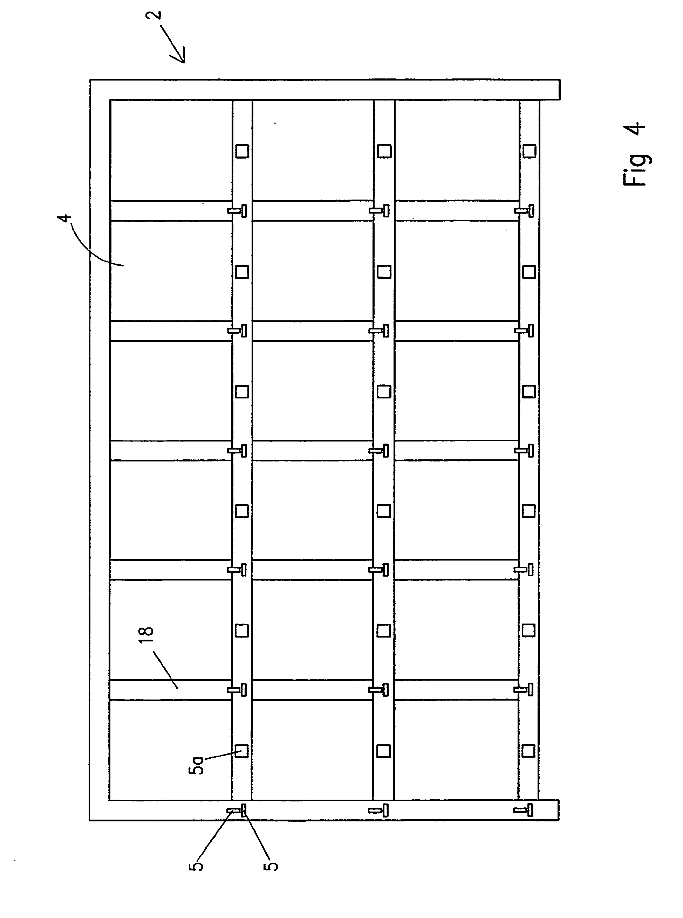

In der oberen Zeile in Figur 4 sind interne Signale SOS, EOS des Barcodelesegeräts dargestellt. Diese Signale kennzeichnen die Grenzen des Öffnungswinkels α, d.h. die Ränder des Abtastbereichs A (SOS: Start of Scan, EOS: End of Scan).

Aus diesen Signalen wird die Position des Barcodelesegeräts relativ zur Zielmarke 5a berechnet. Hierzu wird die in der Auswerteeinheit 9 abspeicherte Breite der Zielmarke 5a verwendet.

Die Signaldifferenz EOL-SOL wird mit der tatsächlichen Breite der Zielmarke 5a in Bezug gesetzt, wodurch eine Eichung der Signale erfolgt.

Anschließend werden die Signale SOL, EOL, mit den Signalen SOS, EOS in Bezug gesetzt, woraus sich die Lage der Zielmarke 5a innerhalb des Abtastbereichs A ergibt. Sobald die Lage der Zielmarke 5a innerhalb des Abtastbereichs A dem vorgegebenen Sollwert entspricht, ist die Feinpositionierung abgeschlossen und das Regalbediengerät 1 wird angehalten.

Prinzipiell kann bei einer geeigneten Wahl der Marken 5 und Zielmarken 5a vom optischen Sensor 6 über die gesamte Fahrstrecke des Regalbediengeräts 1 eine Feinpositionierung erfolgen. Voraussetzung hierfür ist lediglich eine ausreichend große Verarbeitungsgeschwindigkeit der im optischen Sensor 6 anstehenden Signale.

In Figur 4 ist ein weiteres Ausführungsbeispiel eines Regalfachsystems 2 dargestellt. In Erweiterung zu dem Regalfachsystem 2 gemäß Figur 1 weist dieses Regalfachsystem 2 mehrere übereinander geordnete Reihen von Regalfächern 4 auf. Die einzelnen Regalfächer 4 sind vorzugsweise identisch ausgebildet.

An jedem Regalfach 4 sind an einer unteren Ecke zwei T-förmig angeordnete Marken 5 angeordnet, welche von Barcodes gebildet sind. Dabei ist jeweils im horizontal angeordneten Barcode die Nummer des Regalfaches 4 in Längsrichtung kodiert. Entsprechend ist im vertikal angeordneten Barcode die Nummer des Regalfaches 4 in vertikaler Richtung kodiert. Der optische Sensor 6 ist so ausgebildet, daß mit diesem sowohl die vertikal als auch die horizontal angeordneten Barcodes lesbar sind. Alternativ kann die Längen- und Höheninformation für ein Regalfach 4 auch in einer Marke 5 kodiert sein.

Zur Absolutortsbestimmung des Regalbediengeräts 1 wird wiederum eine Referenzfahrt durchgeführt. Als Referenzwerte werden vorzugsweise die in einer horizontalen und in einer vertikalen Reihe angeordneten Barcodes erfaßt.

Zur Grobpositionierung wird anschließend das Regalbediengerät 1 auf den Schienen solange verfahren, bis es sich vor dem entsprechenden in horizontaler Richtung verlaufenden Barcode einer horizontalen Reihe von Regalfächern 4 befindet. Dann wird der Greifer mit dem daran befindlichen optischen Sensor 6 solange in vertikaler Richtung verfahren, bis auch der entsprechende vertikal angeordnete Barcode des Regalfachs 4, an welchem die Positionierung erfolgen soll, erfaßt ist. Dann wird das Regalbediengerät 1 zur Feinpositionierung in Richtung der Zielmarke 5a des entsprechenden Regalfaches 4 bewegt. Die Feinpositionierung erfolgt dabei in analoger Weise wie bei dem Ausführungsbeispiel gemäß Figur 1.

Alternativ können bei dem Regalfachsystem 2 gemäß Figur 4 jeweils nur an einer Reihe des Regalfachsystems 2 Marken 5 und Zielmarken 5a angebracht sein. Vorteilhafterweise ist an der unteren Reihe des Regalfachs 4 an jeweils einem Regalfach 4 eine Marke 5 angebracht, in welcher die Nummer des Regalfachs 4 kodiert ist. Zudem ist jeweils in der Mitte eines jeden Regalfachs 4 dieser Reihe ein Zielmarke 5a angebracht. Die Marken 5 und Zielmarken 5a werden mittels des als Barcodelesegerät ausgebildeten optischen Sensors 6 am Regalbediengerät 1 erfaßt.

Zudem ist an einem nicht dargestellten, vertikal verlaufenden Hubarm des Regalbediengeräts 1 ein Längenmaßstab, vorzugsweise in Form von Marken 5, angebracht. Am Greifer des Regalbediengeräts 1, welcher am Hubarm höhenverstellbar gelagert ist, ist ein weiterer optischer Sensor 6 angebracht, welcher den Längenmaßstab zur Bestimmung der Höhenlage des Greifers erfaßt.

Bei dieser Ausführungsform kann die Vertikalbewegung des Greifers zeitgleich mit dem Verfahren des Regalbediengeräts 1 in horizontaler Richtung erfolgen. Der erste optische Sensor 6 am Regalbediengerät 1 erfaßt dabei zur Grob- und Feinpositionierung in Längsrichtung die Marken 5 und Zielmarken 5a am Regalfachsystem 2, wobei gleichzeitig der Greifer solange nach oben bewegt wird, bis vom zweiten optischen Sensor 6 die vorgegebene Sollposition am Längenmaßstab erfaßt wird.

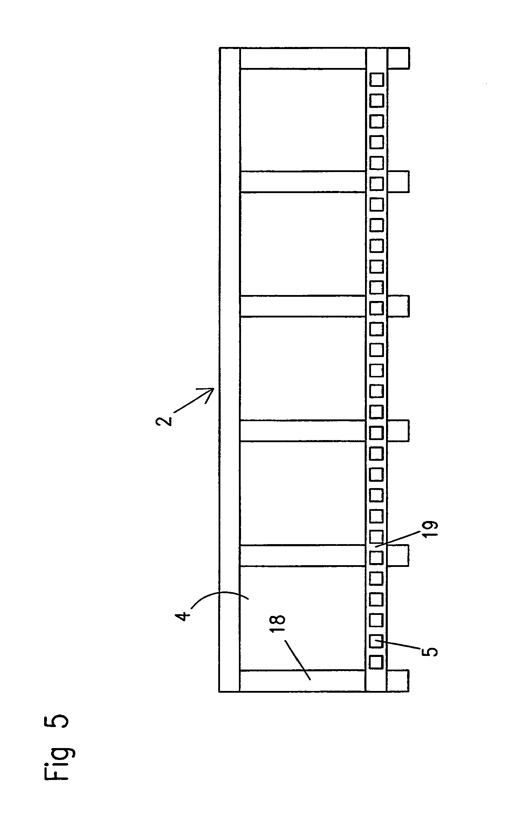

In Figur 5 ist ein weiteres Regalfachsystem 2 dargestellt, welches aus mehreren identischen, nebeneinander angeordneten Regalfächern 4 besteht. Die einzelnen Regalfächer 4 sind wiederum durch Pfosten 18 voneinander getrennt. Die Frontseiten der Böden der Regalfächer 4 bilden eine durchgehende Leiste 19, auf welcher in äquidistanten Abständen Marken 5 nebeneinander angeordnet sind. Die Marken 5 sind fortlaufend numeriert, wobei die Nummern der einzelnen Marken 5 in deren Mustern kodiert sind. Diese Anordnung der Marken 5 bildet ein Längenmeßsystem, welches zur Grob- und Feinpositionierung des Regalbediengeräts 1 verwendet wird.

Die Absolutortsbestimmung des Regalbediengeräts 1 erfolgt analog zu den vorigen Ausführungsbeispielen während einer Referenzfahrt, in dem die Nummern der Marken 5 als Referenzwerte eingespeichert werden.

Zur Grobpositionierung des Regalbediengeräts 1 wird dieses zunächst mit konstanter Geschwindigkeit am Regalfachsystem 2 vorbeibewegt. Dabei werden zur Positionsbestimmung des Regalbediengeräts 1 fortlaufend vom optischen Sensor 6 die Marken 5 am Regalfachsystem 2 erfaßt und mit den Referenzwerten verglichen. Zudem werden die Zeitdifferenzen zwischen jeweils zwei Abtastungen von zwei aufeinanderfolgenden Marken 5 erfaßt und abgespeichert. Sobald eine bestimmte Marke 5 erfaßt wird, die in bestimmter Entfernung von der Zielposition entfernt ist, auf welche das Regalbediengerät 1 positioniert werden soll, wird anhand der abgespeicherten Zeitdifferenzen das Regalbediengerät 1 in geeigneter Weise abgebremst, um dieses an einen vorgegebenen Zielort zu positionieren. Dabei kann der Bremsweg insbesondere durch das vorgegebene Geschwindigkeitsprofil und die abgespeicherten Zeitdifferenzen genau ermittelt werden.

Bei dieser Art der Feinpositionierung müssen keine separaten Zielmarken 5a an dem Zielort, an welchen das Regalbediengerät 1 positioniert werden soll, angebracht werden. Vielmehr sind hierfür die das Längenmeßsystem bildenden Marken 5 ausreichend.

Anstelle der Extrapolation der ermittelten Zeitdifferenzen zwischen der Abtastung zweier aufeinander folgenden Marken 5 kann zur Feinpositionierung in Analogie zu den vorigen Ausführungsbeispielen auch die Position des optischen Sensors 6 relativ zu einer der Marken 5 des Längenmeßsystems bestimmt werden. Auch in diesem Fall werden keine zusätzlichen Zielmarken 5a zur Feinpositionierung des Regalbediengeräts 1 benötigt.

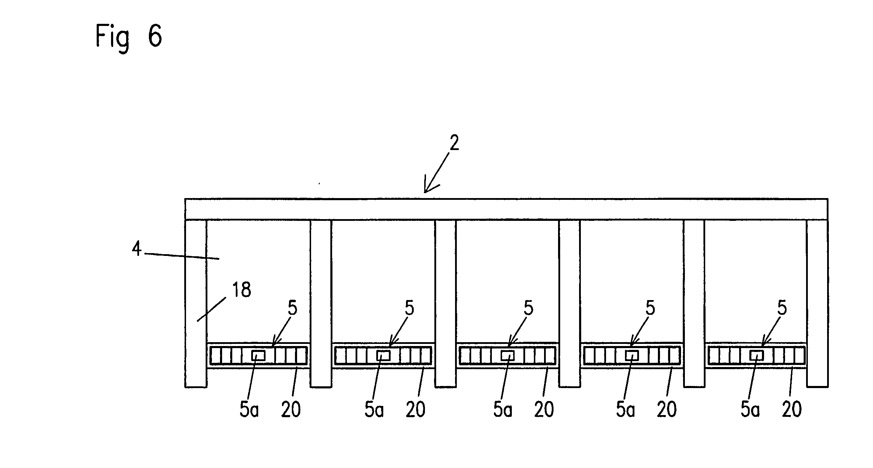

Figur 6 zeigt ein weiteres Ausführungsbeispiel eines Regalfachsystems 2, welches aus einer Mehrfachanordnung von identischen nebeneinander angeordneten Regalfächern 4 gebildet ist, welche durch Pfosten 18 getrennt sind. An den Frontseiten der Böden der Regalfächer 4 befinden sich horizontal verlaufende Leisten 20, welche jeweils dieselbe Länge aufweisen und sich zwischen zwei benachbarten Pfosten 18 erstrecken.

Auf jeder dieser Leisten 20 ist jeweils eine horizontal verlaufende Marke 5 angeordnet, welche sich über einen Teil der Länge der Leiste 20 erstreckt. Die Marken 5 weisen vorzugsweise jeweils identische Abmessungen auf und sind mittig auf den Leisten 20 aufgebracht.

Auf die Marken 5 sind als Kodierungen jeweils die Nummer des entsprechenden Regalfachs 4 sowie ein in horizontaler Richtung verlaufender Maßstab aufgebracht. Zudem ist in der Mitte einer Marke 5 zusätzlich eine Zielmarke 5a angebracht, welche die Zielposition definiert, an welcher das Regalbediengerät 1 positioniert werden soll. Vorteilhafterweise besteht die Zielmarke 5a aus einer Kennzeichnung innerhalb der Kodierung der Marke 5, so daß die Zielmarke 5a und die Marke 5 einteilig beispielsweise in Form eines Klebestreifens ausgebildet sein können.

Analog zu dem Ausführungsbeispiel gemäß Figur 1 wird das Regalbediengerät 1 in horizontaler Richtung am Regalfachsystem 2 vorbeibewegt. Dabei werden die Marken 5 am Regalfachsystem 2 von dem optischen Sensor 6 am Regalbediengerät 1 fortlaufend abgetastet. Dabei ist der optische Sensor 6 wiederum von einem Barcodelesegerät gebildet, dessen Sendelichtstrahlen 12 periodisch den durch den Öffnungswinkel α begrenzten Abtastbereich A auf der Frontseite des Regalfachsystems 2 überstreichen.

Bei dem Ausführungsbeispiel gemäß Figur 6 sind die Abstände zwischen zwei benachbarten Marken 5 größer als der vom optischen Sensor 6 überstrichene Abtastbereich A.

Zur Absolutortsbestimmung des Regalbediengeräts 1 wird wie bei den vorigen Ausführungsbeispielen eine Referenzfahrt durchgeführt. Dabei werden die Nummern der einzelnen Regalfächer 4 als Referenzwerte eingelernt. Zudem können zweckmäßigerweise während der Referenzfahrt auch die Maßstäbe der einzelnen Marken 5 erfaßt und eingelernt werden.

Während der auf die Referenzfahrt folgenden Fahrten des Regalbediengeräts 1 werden die Marken 5 nacheinander erfaßt, wodurch eine Grobpositionierung des Regalbediengeräts 1 erfolgt. Da die Zwischenräume zwischen benachbarten Marken 5 größer sind als der Abtastbereich A des optischen Sensors 6, werden vom optischen Sensor 6 in den Zeitintervallen, in welchen die Sendelichtstrahlen 12 des optischen Sensors 6 auf diese Zwischenräume treffen, keine Marken 5 erfaßt. Während dieser Blindfahrt ist keine Positionsbestimmung des Regalbediengeräts 1 möglich. Jedoch kann bei bekannter, konstanter Geschwindigkeit die Position zwischen zwei aufeinanderfolgenden Marken 5 extrapoliert werden. Infolge von Drehzahlschwankungen des Motors des Regalbediengeräts 1 oder aufgrund des Schlupfes der Antriebe kann diese Positionsbestimmung verfälscht werden. Insbesondere kann bei der Erfassung der einzelnen Maßstäbe für die entsprechenden Zeitintervalle die Geschwindigkeit des Regalbediengeräts 1 genau ermittelt werden. Dann kann auch für die Zeiträume zwischen den einzelnen Zeitintervallen durch Interpolation die Geschwindigkeit des Regalbediengeräts 1 genau bestimmt werden.

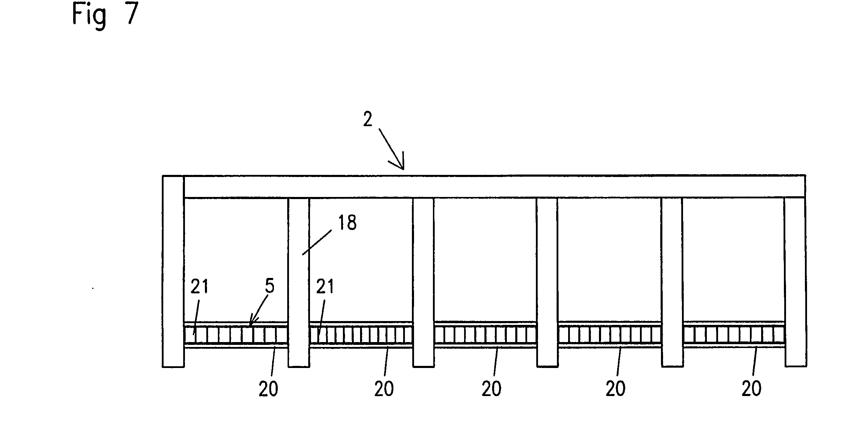

Das in Figur 7 dargestellte Regalfachsystem 2 weist denselben Aufbau wie das Regalfachsystem 2 gemäß Figur 6 auf. Im Unterschied zu dem Ausführungsbeispiel gemäß Figur 6 sind auf den Leisten 20 Marken 5 aufgebracht, welche sich jeweils über die gesamte Länge einer Leiste 20 erstrecken. Zwischen benachbarten Marken 5 verbleibt jeweils ein Pfosten 18 des Regalfachs 4 als Zwischenraum, welcher kleiner als der vom optischen Sensor 6 überstrichene Abtastbereich A ist.

In den Marken 5 ist jeweils die Nummer des entsprechenden Regalfachs 4 kodiert. Zudem ist in den Marken 5 ein Maßstab kodiert. Vorzugsweise sind dabei die Marken 5 jeweils in äquidistante Bereiche 21 unterteilt, wobei in jedem Bereich 21 eine bestimmte Nummer beispielsweise in Form eines Barcodes kodiert ist. Dabei sind die Bereiche einer Marke 5 fortlaufend numeriert. Zudem sind die Nummern verschiedener Marken 5 auch in aufsteigender Reihenfolge numeriert, so daß sich die Nummern sämtlicher Marken 5 am Regalfachsystem 2 zu einem Gesamt-Maßstab ergänzen.

Somit kann durch die Erfassung der Nummern mittels des optischen Sensors 6 nicht nur festgestellt werden, an welchem Regalfach 4 sich das Regalbediengerät 1 befindet, sondern auch an welcher Position am Regalfach 4 das Regalbediengerät 1 angeordnet ist.

Dabei erfolgt die Absolutortsbestimmung des Regalbediengeräts 1 wiederum während einer Referenzfahrt. Während dieser Referenzfahrt werden nacheinander die Nummern an den einzelnen Marken 5 vom optischen Sensor 6 erfaßt und als Referenzwerte abgespeichert. Da der Zwischenraum zwischen zwei benachbarten Marken 5 kleiner ist als der Abtastbereich A des Sensors 6, ist gewährleistet, daß zu jedem Zeitpunkt der Referenzfahrt wenigstens eine Marke 5 vom optischen Sensor 6 erfaßt wird. Somit kann der Gesamt-Maßstab, der durch die Nummern auf den Marken 5 vorgegeben ist, lückenlos auf den Verfahrweg des Regalbediengeräts 1 abgebildet werden.

Während der auf die Referenzfahrt folgenden Fahrten des Regalbediengeräts 1 werden zur Grobpositionierung des Regalbediengeräts 1 die Nummern der Marken 5 mittels des optischen Sensors 6 erfaßt und mit den gespeicherten Referenzwerten verglichen.

Zur Feinpositionierung des Regalbediengeräts 1 wird dieses auf eine Zielposition ausgerichtet, die zweckmäßigerweise wiederum von der Mitte eines Regalfaches 4 gebildet ist. Die Mitte eines Regalfaches 4 läßt sich dabei anhand des Maßstabs der Marke 5 an einem Regalfach 4 direkt ermitteln. Ungenauigkeiten können bei diesem Verfahren dadurch entstehen, daß der Maßstab nicht exakt auf die Leiste 20 aufgeklebt ist. Zudem entspricht im allgemeinen die Länge einer Leiste 20 nicht exakt dem ganzzahligen Vielfachen der Längen der Bereiche auf einer Marke 5, so daß bei Zuschneiden der Marke 5 ein an den Pfosten 18 angrenzender Bereich nicht mehr vollständig erhalten ist.

In diesem Fall wird zweckmäßigerweise mittels des optischen Sensors 6 die Breite der Pfosten 18 durch die Detektion der angrenzenden Bereiche auf den Marken 5 beidseits des Pfosten 18 detektiert.

Aus den Breiten zweier benachbarter Pfosten 18 sowie aus der Länge der Marke 5, die sich durch Ermittlung der einzelnen Bereiche, welche den Maßstab bilden, bestimmen läßt, kann exakt die Mitte zwischen zwei Pfosten 18 bestimmt werden. Die so bestimmte Mitte des Regalfachs 4 definiert den Zielort, auf welchen das Regalbediengerät 1 positioniert wird. Zweckmäßigerweise können die einzelnen Zielorte als Sollwerte in der Steuereinheit abgespeichert sein.

## Patentansprüche

1. Vorrichtung zur Positionierung eines Fahrzeugs an einem stationären Gegenstand, wobei das Fahrzeug entlang einer vorgegebenen Bahn entlang des Gegenstands verfahrbar ist, wobei an dem Gegenstand in vorgegebenen Abständen Kodierungen aufweisende Marken (5) angebracht sind, welche mittels eines optischen Sensors (6) am Fahrzeug erfassbar sind, welcher von einem Barcodelesegerät gebildet ist, dessen Sender (10) Sendelichtstrahlen (12) emittiert, welche innerhalb eines vorgegebenen Öffnungswinkel (α) periodisch einen Abtastbereich (A) überstreichen, wobei zur Absolutortsbestimmung des Fahrzeuges während einer Referenzfahrt die Kodierungen der Marken (5) nacheinander erfasst und die dabei registrierten Messwerte als Referenzwerte abgespeichert werden, wobei während auf die Referenzfahrt folgender Fahrten des Fahrzeugs die Kodierungen der Marken (5) zur Grobpositionierung des Fahrzeugs erfasst und mit den Referenzwerten verglichen werden, **dadurch gekennzeichnet, dass** zur Feinpositionierung mittels des am Fahrzeug angeordneten optischen Sensors (6) dessen Lage relativ zu einer der Marken (5) oder einer weiteren Zielmarke (5a) **dadurch** bestimmbar ist, dass während jeder Abtastperiode durch den optischen Sensor (6) die Positionen der den Öffnungswinkel (α) begrenzenden internen Signale (SOS, EOS) und die Positionen der von einer Marke (5) oder Zielmarke (5a) stammenden Signale (SOL, EOL) ermittelt werden, und dass bei erfolgter Feinpositionierung die Positionen der Signale (SOL, EOL) relativ zu den Positionen der Signale (SOS, EOS) vorgegebene Werte aufweisen.

2. Vorrichtung nach Anspruch 1, **dadurch gekennzeichnet, dass** an dem Gegenstand ein Längenmeßsystem in Form von in äquidistanten Abständen in Fahrtrichtung des Fahrzeugs angeordneten Marken (5) vorgesehen ist, welche vom optischen Sensor (6) des Fahrzeugs erfasst werden.

3. Vorrichtung nach Anspruch 2, **dadurch gekennzeichnet, dass** die Marken (5) von Barcodes gebildet sind, in welchen die Reihenfolge der Marken (5) innerhalb des Längenmeßsystem kodiert ist.

4. Vorrichtung nach einem der Ansprüche 2 oder 3, **dadurch gekennzeichnet, dass** zur Feinpositionierung des Fahrzeugs die Position einer der Marken (5) des Längenmeßsystems mittels des optischen Sensors (6) erfassbar ist.

5. Vorrichtung nach einem der Ansprüche 1 bis 4, **dadurch gekennzeichnet, dass** auf den Marken (5) jeweils eine die Zielmarke (5a) bildende Kennzeichnung aufgebracht ist.

## Claims

1. Device for positioning a vehicle at a stationary object, wherein the vehicle is movable along a predetermined path along the object, wherein marks (5) having codings are mounted at the object at predetermined spacings and can be detected by means of an optical sensor (6) at the vehicle, the sensor being formed by a bar code reader, the transmitter (10) of which emits transmitted light beams (12) periodically sweeping a scanning range (A) within a predetermined opening angle (α), wherein for absolute positional determination of the vehicle the codings of the marks (5) are detected in succession during a reference travel and the measurement values registered in that case are stored as reference values, wherein during travels of the vehicle following the reference travel the codings of the marks (5) are detected for coarse positioning of the vehicle and compared with the reference values, **characterised in that** for fine positioning by means of the optical sensor (6) arranged at the vehicle the position of the sensor relative to one of the marks (5) or a further target mark (5a) is determinable **in that** during each scanning period by the optical sensor (6) the positions of the internal signals (SOS, EOS) delimiting the opening angle (α) and the positions of the signals (SOL, EOL) originating from a mark (5) or target mark (5a) are ascertained and that when fine positioning is carried out the positions of the signals (SOL, EOL) relative to the positions of the signals (SOS, EOS) have predetermined values.

2. Device according to claim 1, **characterised in that** a length measuring system in the form of marks (5) which are arranged at equidistant spacings in travel direction of the vehicle and are detected by the optical sensor (6) of the vehicle is provided at the object.

3. Device according to claim 2, **characterised in that** the marks (5) are formed by bar codes in which the sequence of marks (5) is coded within the length measuring system.

4. Device according to one of claims 2 and 3, **characterised in that** for fine positioning of the vehicle the position of one of the marks (5) of the length measuring system is detectable by means of the optical sensor (6).

5. Device according to one of claims 1 to 4, **characterised in that** a respective identification forming the target mark (5a) is mounted on the marks (5).

## Revendications

1. Dispositif pour positionner un véhicule sur un objet stationnaire, le véhicule étant déplaçable le long d'un parcours défini, des marques (5) présentant des codages étant placées à intervalles définis sur l'objet, lesquelles peuvent être saisies au moyen d'un capteur optique (6) situé sur le véhicule, lequel est formé d'un lecteur de code-barres dont l'émetteur (10) émet des rayons lumineux d'émission (12) qui balayent périodiquement une zone de balayage (A) à l'intérieur d'un angle d'ouverture défini (α), les codages des marques (5) étant saisis l'un après l'autre pendant un trajet de référence pour le positionnement absolu du véhicule et les valeurs enregistrées à cette occasion étant mémorisées en tant que valeurs de référence, les codages des marques (5) étant, pendant les trajets du véhicule succédant au trajet de référence, saisis pour le positionnement approximatif du véhicule et comparés avec les valeurs de référence, **caractérisé par le fait que**, pour le positionnement précis au moyen du capteur optique (6) disposé sur le véhicule, sa position relative par rapport à une des marques (5) ou une autre marque cible (5a) peut être établie en déterminant pendant chaque période de balayage par le capteur optique (6) les positions des signaux internes (SOS, EOS) limitant l'angle d'ouverture (α) et les positions des signaux (SOL, EOL) provenant d'une marque (5) ou d'une marque cible (5a), et que, quand le positionnement précis est effectué, les positions des signaux (SOL, EOL) présentent des valeurs définies par rapport aux positions des signaux (SOS, EOS).

2. Dispositif selon la revendication 1, **caractérisé par le fait qu'**il est prévu sur l'objet un système de mesure de longueurs sous la forme de marques (5) disposées à intervalles équidistants dans le sens de la marche du véhicule, lesquelles sont saisies par le capteur optique (6) du véhicule.

3. Dispositif selon la revendication 2, **caractérisé par le fait que** les marques (5) sont formées de code-barres dans lesquels est codé l'ordre des marques (5) au sein du système de mesure de longueurs.

4. Dispositif selon l'une des revendications 2 ou 3, **caractérisé par le fait que** pour le positionnement précis du véhicule, il est possible de saisir la position d'une des marques (5) du système de mesure de longueurs au moyen du capteur optique (6).

5. Dispositif selon l'une des revendications 1 à 4, **caractérisé par le fait qu'**une identification formant chaque fois la marque cible (5a) est appliquée sur les marques (5).
